# EUROPEAN PATENT SPECIFICATION

(11) **EP 3 163 459 B1**
(45) Date of publication and mention of the grant of the patent: **23.06.2021**
(21) Application number: 15821669.7
(22) Date of filing: 08.07.2015
(51) Int. Cl.: H04L 29/08, G06F 3/06, G06F 13/10, G06F 12/06, G06F 12/14, G06F 13/42, G06F 21/44, G06F 21/79

(54) **AUTOMATIC CONFIGURATION METHOD AND DEVICE FOR STORAGE ARRAY, AND STORAGE SYSTEM**
AUTOMATISCHES KONFIGURATIONSVERFAHREN UND VORRICHTUNG FÜR SPEICHERANORDNUNG UND SPEICHERSYSTEM
PROCÉDÉ ET DISPOSITIF DE CONFIGURATION AUTOMATIQUE POUR MATRICE DE STOCKAGE, ET SYSTÈME DE STOCKAGE

(30) Priority: 14.07.2014 CN 201410331029
(43) Date of publication of application: 03.05.2017
(73) Proprietor: Huawei Technologies Co., Ltd., Shenzhen, Guangdong 518129 (CN)
(72) Inventor: KANG, Tao, Shenzhen Guangdong 518129 (CN)
(74) Representative: Thun, Clemens
(86) International application number: PCT/CN2015/083581
(87) International publication number: WO 2016/008379

(56) References cited:
- CN-A- 1 909 478
- CN-A- 1 984 010
- CN-A- 101 022 425
- CN-A- 101 022 425
- CN-A- 101 719 106
- CN-A- 104 133 776
- US-A1- 2006 085 522
- US-A1- 2007 079 097
- US-A1- 2011 231 901
- US-B1- 8 086 760
- John Sexton ET AL: "IBM Flex System V7000 Storage Node Introduction and Implementation Guide Introduction to IBM Flex System family, features, and functions", Redbooks, 17 September 2013 (2013-09-17), pages 1-670, XP055632491, Retrieved from the Internet: URL:http://www.redbooks.ibm.com/redbooks/p dfs/sg248068.pdf [retrieved on 2019-10-15]

## Description

### TECHNICAL FIELD

The present invention relates to the data storage field, and in particular, to a storage array automatic configuration method and apparatus, and a storage system.

### BACKGROUND

The SCSI (Small Computer System Interface, Small Computer System Interface) standards stipulate data block I/O (input/output) operations performed between a host and a peripheral device in a storage system. The peripheral device includes storage arrays such as a disk, a tape, and an optical disc. iSCSI (Internet Small Computer System Interface, Internet Small Computer System Interface) is an SCSI transport protocol based on TCP/IP (Transmission Control Protocol/Internet Protocol, Transmission Control Protocol/Internet Protocol), and is used to transfer SCSI commands and data between a client and a storage system over an IP network. An iSCSI storage technology is a network-based data storage technology and features low hardware costs, simple operations, strong expandability, fast transmission, and the like, thereby drawing attention of most enterprises. When the iSCSI storage technology is used, a storage array and a host need to be configured.

During related storage array configuration, an administrator needs to switch among a deployment tool program, a storage management program, and a host management program to complete the storage array configuration.

The prior art has the following disadvantages: When configuring a storage array, an administrator needs to manually switch among programs, such as deployment tool software, a storage management program, a host management program, and a command line tool, to perform configuration, involving complex procedures and many interactions.

US 8,086,760 discloses that communications connections with data storage systems are managed. A discovery process is executed to identify an iSCSI port on data storage system. Settings for the iSCSI port are accepted as user input at a server. Communication is performed from the server to the data storage system to configure the iSCSI port.

CN 101 022 425 A discloses a method for assigning storage resource based on iSCSI. The method includes: the storage system automatically assigns an IP address for the client, and the client automatically issues an iSCSI connection to the storage system after obtaining the IP address.

US 2007/079097 discloses that a single SAN management utility discovers all hosts and HBAs in a SAN, configures the storage switches, creates Logical Units within a storage array, and assigns Logical Units to the hosts in the SAN without requiring the administrator to have a detailed understanding of all of the devices in the SAN or a SAN configuration plan. The SAN management utility may first invoke HBA configuration routines to discover and configure the HBAs in the SAN and determine the hosts in which those HBAs reside. The SAN management utility may then utilize the SAN link to set a new IP address for the storage switch, and then configure the switch over an Ethernet connection. In addition, the SAN management utility may interface with a configuration utility in the storage array through a common storage management specification to create and assign Logical Units in the storage array.

US 2011/0231901 discloses a management system that is capable of efficiently discovering each apparatus coupled to a communication network. The management server 1 judges a type of an apparatus coupled to a communication network 5 on the basis of service utilization information T1, which is acquired from a discovered device or acquired from a device (an iSNS server 4, for example) having a name server function for resolving an address from a public name, and on the basis of discovery management information prepared beforehand (S1, S2). The management server 1 acquires a communication protocol in accordance with the type of the apparatus from protocol selection rules T3, and attempts authentication of the apparatus by using the communication protocol (S3).

CN 01 909 478 discloses a method that manages several memory arrays via a switch or a management server. The method includes connecting a plurality of iSCSI target storage arrays by set one iSCSI IP address, dividing the loading process and the connection process of the iSCSI. The IP address of each storage array is assigned by DHCP.

Further, prior art document "IBM Flex System V7000 Storage Node Introduction and Implementation Guide Introduction to IBM Flex System family, features, and functions", Redbooks, 17 September 2013, John Sexton et. al. refers to an introduction to the IBM Flex System family.

### SUMMARY

To resolve the problem of complex procedures and many interactions that arises when an administrator needs to manually switch among storage management programs to configure a storage array, embodiments of the present invention provide a storage array automatic configuration method and apparatus.

This problem is solved by the subject matter of the independent claims. Further implementation forms are provided in the dependent claims.

The technical solutions according to the embodiments of the present invention have the following beneficial effects:
A host receives configuration information. A management IP address in the configuration information is sent to a storage array to establish a connection to the storage array by using the management IP address. Then a service IP address in the configuration information is sent to the storage array to establish an iSCSI connection to the storage array by using the service IP address. Then a configured capacity is sent to the storage array, so that the storage array provides the host with storage space that has the configured capacity. After receiving configuration information entered by an administrator, the host can automatically trigger, by using the configuration information, the storage array to configure storage space for the host. Therefore, the technical solutions greatly simplify a storage array configuration process, resolve the problem of a complex configuration process and many interactions that arises when the administrator needs to manually switch among storage management programs to configure the storage array in the prior art, and achieve effects of improving production efficiency and significantly reducing service training costs of the administrator.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of an implementation environment involved in a storage array automatic configuration method according to some embodiments of the present invention;
FIG. 2 is a flowchart of a storage array automatic configuration method according to an embodiment of the present invention;
FIG. 3 is a flowchart of a storage array automatic configuration method according to another embodiment of the present invention;
FIG. 4A-1 and FIG. 4A-2 are a flowchart of a storage array automatic configuration method according to still another embodiment of the present invention;

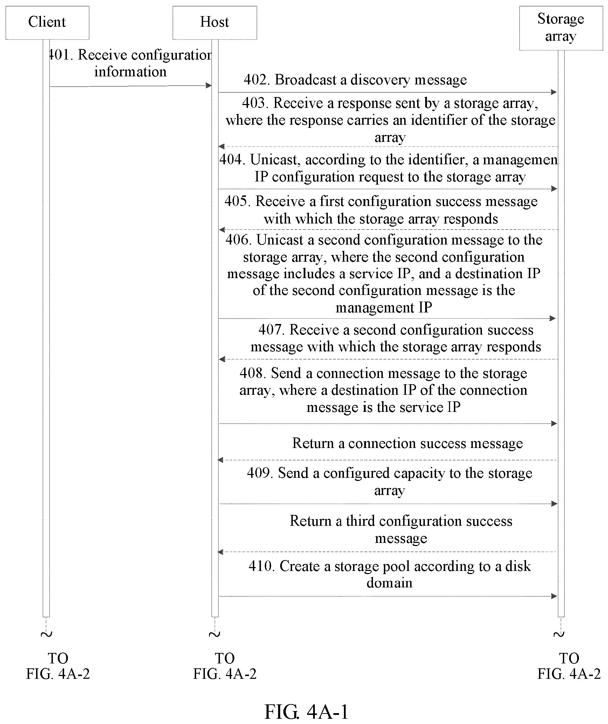

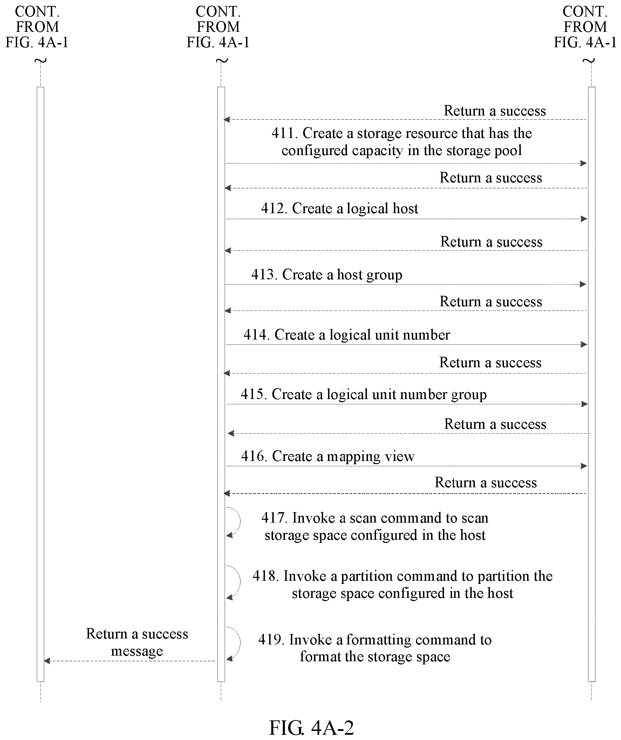

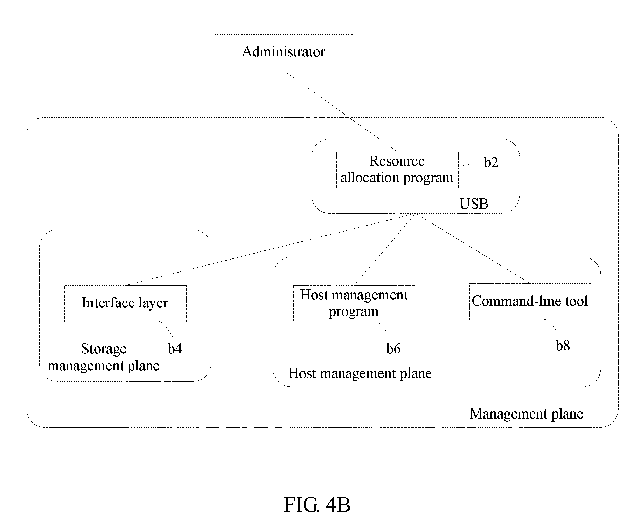

FIG. 4B is a schematic diagram of storage array configuration by an administrator according to some embodiments of the present invention;

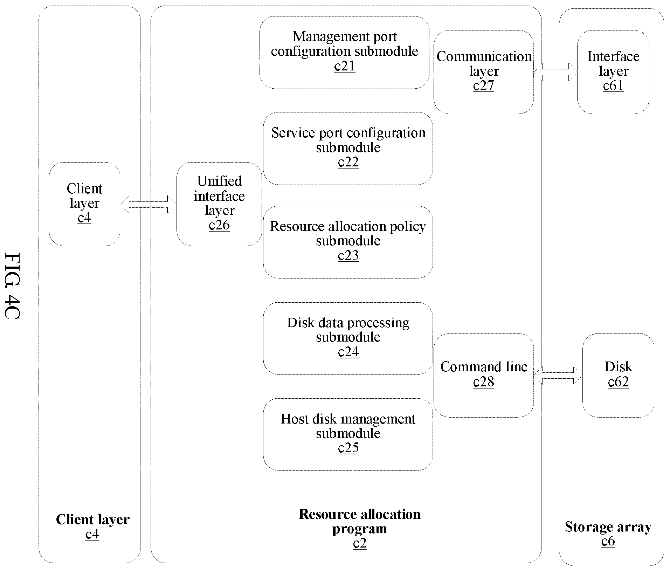

FIG. 4C is a schematic diagram of structural connections among a resource allocation program, a client layer of a host, and a storage array according to some embodiments of the present invention;

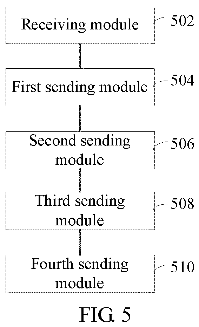

FIG. 5 is a schematic diagram of a structure of a storage array automatic configuration apparatus according to an embodiment of the present invention;

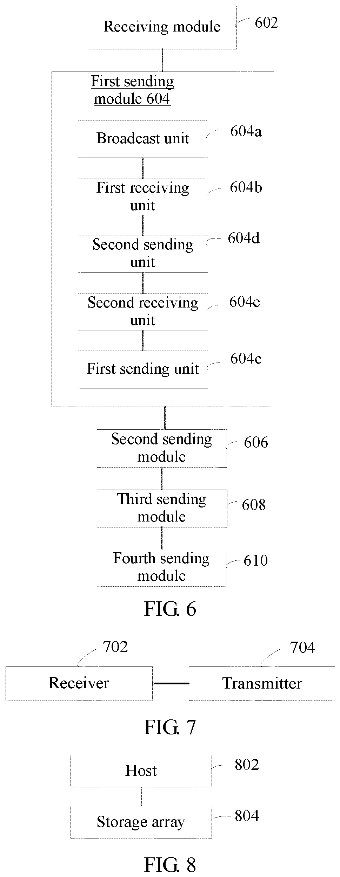

FIG. 6 is a schematic diagram of a structure of a storage array automatic configuration apparatus according to another embodiment of the present invention;
FIG. 7 is a schematic diagram of a structure of a host according to an embodiment of the present invention; and
FIG. 8 is a schematic diagram of a structure of a storage system according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

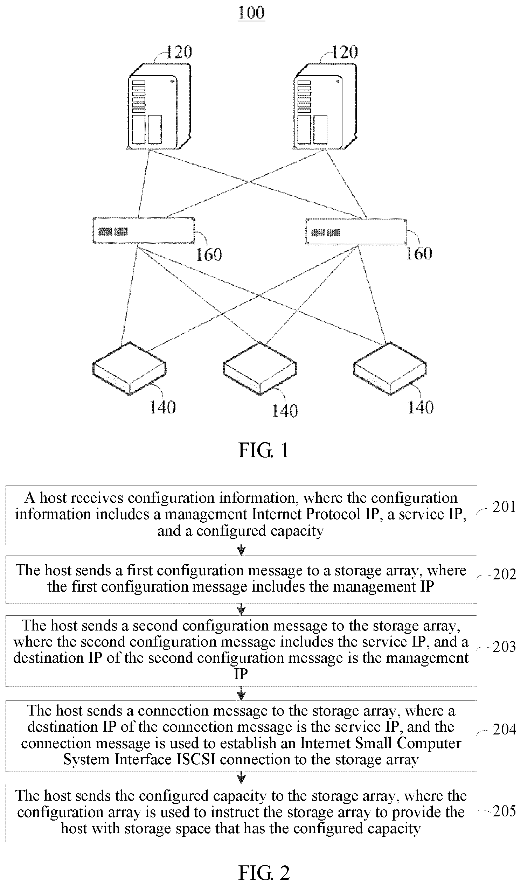

Referring to FIG. 1, FIG. 1 is a schematic diagram of an implementation environment involved in a storage array automatic configuration method according to some embodiments of the present invention. A storage system 100 is provided in the implementation environment. The storage system includes a host 120 and a storage array 140.

Multiple hosts 120 may share the storage array 140. The storage array 140 may include multiple storage devices such as disks, tapes, and optical discs.

A switch 160 may be connected between the host 120 and the storage array 140. The switch 160, the host 120, and the storage array 140 may communicate with each other based on the iSCSI protocol. All the following embodiments are implemented in the storage system 100.

Referring to FIG. 2, FIG. 2 is a flowchart of a storage array automatic configuration method according to an embodiment of the present invention. The storage array automatic configuration method is illustrated mainly by application of the method in the host 120 in the implementation environment shown in FIG. 1. The storage array automatic configuration method may include the following steps:
201. The host receives configuration information, where the configuration information includes a management Internet Protocol IP, a service IP, and a configured capacity.
202. The host sends a first configuration message to a storage array, where the first configuration message includes the management IP.
203. The host sends a second configuration message to the storage array, where the second configuration message includes the service IP, and a destination IP of the second configuration message is the management IP.
204. The host sends a connection message to the storage array, where a destination IP of the connection message is the service IP, and the connection message is used to establish an Internet Small Computer System Interface iSCSI connection to the storage array.
205. The host sends the configured capacity to the storage array, where the configured capacity is used to instruct the storage array to provide the host with storage space that has the configured capacity.

To sum up, in the storage array automatic configuration method according to this embodiment of the present invention, a storage array is automatically configured according to received configuration information, which resolves the following problems in the prior art: a complex configuration process and many interactions that are involved when an administrator needs to manually switch among storage management programs to configure a storage array, difficulties in maintaining and upgrading the storage management programs, and strict requirements and technical thresholds for the administrator. The storage array can be automatically configured after configuration information entered by the administrator is received, and therefore, the method greatly simplifies the storage array configuration process, improves production efficiency, and significantly reduces service training costs of the administrator.

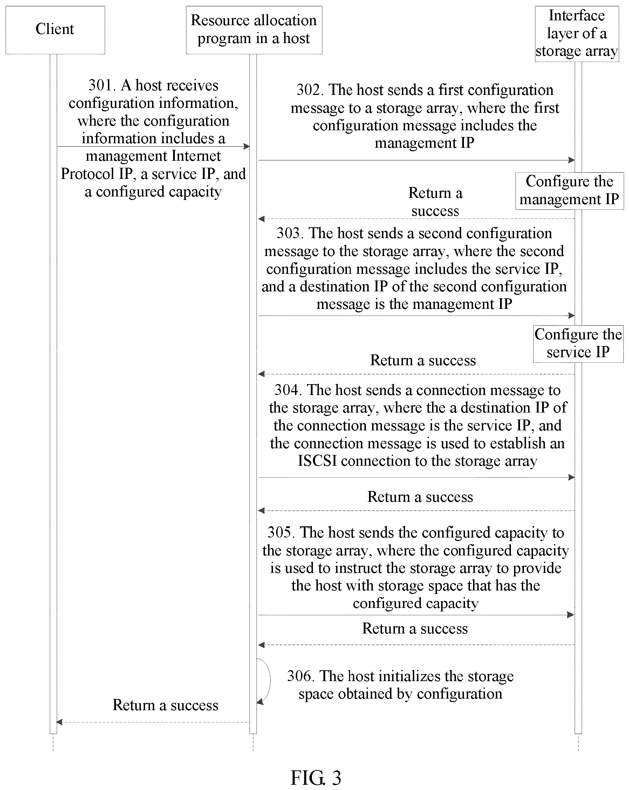

Referring to FIG. 3, FIG. 3 is a flowchart of a storage array automatic configuration method according to another embodiment of the present invention. The storage array automatic configuration method is illustrated mainly by application of the method in the host 120 in the implementation environment shown in FIG. 1. The storage array automatic configuration method may include the following steps:
301. The host receives configuration information, where the configuration information includes a management Internet Protocol IP, a service IP, and a configured capacity.

In actual application, a resource allocation program may be disposed in the host. The resource allocation program provides an administrator with a configuration user interface on which the administrator can enter configuration information required for configuring a storage array. The configuration information may include, for example, a management IP address, a service IP address, and a configured capacity. Correspondingly, the resource allocation program may receive the configuration information entered by the administrator in the configuration user interface.

In a process of configuring the storage array, the management IP address may be used to provide management, and the service IP address may be used to provide a service.

302. The host sends a first configuration message to a storage array, where the first configuration message includes the management IP address.

The first configuration message is used to trigger the storage array to configure the management IP address on the storage array.

After receiving the first configuration message, the storage array configures the management IP address on the storage array. After the management IP is configured successfully, the storage array feeds back a configuration success message to the host.

303. The host sends a second configuration message to the storage array, where the second configuration message includes the service IP, and a destination IP of the second configuration message is the management IP.

The second configuration message is used to trigger the storage array to configure the service IP address on the storage array.

After the storage array completes configuring the management IP, the host may send the second configuration message to the storage array by using the management IP address (that is, using the management IP address as the destination IP address), to request the storage array to configure the service IP address.

After receiving the second configuration message, the storage array configures the management IP address on the storage array.

304. The host sends a connection message to the storage array, where a destination IP of the connection message is the service IP, and the connection message is used to establish an iSCSI connection to the storage array.

After the storage array completes configuring the service IP address, the host may send the connection message to the storage array by using the service IP address (that is, using the service IP address as the destination IP address), to request establishment of the iSCSI connection to the storage array.

After receiving the connection message, the storage array establishes the iSCSI connection to the host by using the service IP address.

305. The host sends the configured capacity to the storage array, where the configured capacity is used to instruct the storage array to provide the host with storage space that has the configured capacity.

The configured capacity is a desired capacity that the host requests the storage array to allocate. After the host sends a value of the configured capacity to the storage array, the storage array provides the host with the storage space that has the configured capacity.

306. The host initializes the storage space obtained by means of configuration.

Generally, after the storage array provides the host with the storage space and before the host uses the storage space, the host needs to initialize the storage space obtained by means of configuration.

It can be learned that the administrator only needs to enter the configuration information in the configuration user interface, and the host can automatically complete storage array configuration, which greatly simplifies a configuration operation process for the administrator.

After the storage space obtained by means of configuration is successfully initialized in the host, the host feeds back a success message to the administrator. For example, an allocation success message may be displayed in the resource allocation program.

It needs to be pointed out that step 301 to step 306 may be implemented as a storage array automatic configuration method executed by the host, or may be implemented as a storage array automatic configuration method executed by a resource configuration program in the host.

To sum up, in the storage array automatic configuration method according to this embodiment of the present invention, a storage array is automatically configured according to received configuration information, which resolves the following problems in the prior art: a complex configuration process and many interactions that are involved when an administrator needs to manually switch among storage management programs to configure a storage array, difficulties in maintaining and upgrading the storage management programs, and strict requirements and technical thresholds for the administrator. The storage array can be automatically configured after configuration information entered by the administrator is received, and therefore the method greatly simplifies the storage array configuration process, improves production efficiency, and significantly reduces service training costs of the administrator.

Referring to FIG. 4A-1 and FIG. 4A-2, FIG. 4A-1 and FIG. 4A-2 are a flowchart of a storage array automatic configuration method according to still another embodiment of the present invention. The storage array automatic configuration method is illustrated mainly by application of the method in the host 120 in the implementation environment shown in FIG. 1. The storage array automatic configuration method may include the following steps:
401. Receive configuration information.

The configuration information includes a management IP address, a service IP address, and a configured capacity.

In actual application, a resource allocation program may be disposed in the host. The resource allocation program provides an administrator with a configuration user interface in which the administrator can enter configuration information required for configuring a storage array. The configuration information may include, for example, a management IP address, a service IP address, and a configured capacity. Correspondingly, the resource allocation program may receive the configuration information entered by the administrator in the configuration user interface.

In a process of configuring the storage array, the management IP address may be used to provide management, and the service IP address may be used to provide a service.

402. Broadcast a discovery message.

The discovery message is used to trigger the storage array to send a response to the host in response to the discovery message.

There may be one, two, or more storage arrays.

The host has not established a connection to the storage array. Therefore, the host may send the discovery message to the storage array in a broadcast manner, so that the storage array sends the response to the host after receiving the discovery message and determining that the host is allowed to use storage space in the storage array.

403. Receive a response sent by a storage array, where the response carries an identifier of the storage array.

There may be multiple storage arrays. Therefore, to ensure that the host knows which storage array sends the allowed response, the response generally carries an identifier of the storage array.

404. According to the identifier, unicast a management IP address configuration request to the storage array.

That is, the host unicasts, to the storage array that sends the allowed response, the management IP address configuration request.

The management IP address configuration request carries the management IP address.

After receiving the response sent by the storage array, the host may unicast the management IP address configuration request to the storage array that has the identifier. The management IP address configuration request is used to instruct the storage array that has the identifier to configure the management IP address, and feed back a configuration success message to the host after configuration is successful.

The management IP address may be set by the administrator according to an actual network environment.

405. Receive a first configuration success message responded by the storage array.

The storage array responds with the first configuration success message after the management IP address is successfully configured on a management port.

In actual application, the storage array further needs to verify identity information of the administrator to avoid invalid configuration. In this case, the configuration user interface generally includes an identity information authentication input box, so that the administrator enters identity authentication information in the identity information authentication input box. Correspondingly, a resource configuration program in the host may receive the identity authentication information and use the identity authentication information as a part of the configuration information.

In one case, during initial configuration, the administrator is reminded to enter the identity authentication information when entering the management IP address, the service IP address, and the configured capacity. That is, configuration information initially entered by the administrator includes the management IP address, the service IP address, the configured capacity, and the identity authentication information. In another case, after receiving the response in step 403, the resource configuration program in the host may remind the administrator to enter the identity authentication information. That is, configuration information initially entered by the administrator includes only the management IP address, the service IP address, and the configured capacity, and the administrator enters the identity authentication information after the host receives the allowed response.

The identity authentication information herein may include a user name and a password. In actual application, before the management IP configuration request is unicasted to the storage array, the method may further include:
First, unicast a first authentication request to the storage array that has the identifier, where the first authentication request carries the identity authentication information.

Correspondingly, after receiving the first authentication request, the storage array may obtain, by parsing, the identity authentication information carried in the first authentication request and perform authentication on the identity authentication information. For example, the storage array may perform matching between the identity authentication information and one piece of pre-stored identity authentication information. If the identity authentication information and the piece of pre-stored identity authentication information are identical, the storage array may determine that the identity authentication information in the first authentication request is authenticated successfully.

Second, receive a first authentication success message responded by the storage array, and perform the step of unicasting the management IP configuration request to the storage array.

406. Unicast a second configuration message to the storage array, where the second configuration message includes a service IP address, and a destination IP address of the second configuration message is a management IP address.

After receiving the second configuration message, the storage array may configure the service IP address on the storage array. After configuration is successful, the storage array may feed back a configuration success message to the host.

The service IP address may be set by the administrator according to the actual network environment.

407. Receive a second configuration success message responded by the storage array.

The storage array responds with the second configuration success message when successfully configuring the service IP address.

408. Send a connection message to the storage array, where a destination IP address of the connection message is the service IP address.

The connection message may be used to establish an Internet Small Computer System Interface iSCSI connection to the storage array.

After receiving the connection message, the storage array establishes the iSCSI connection to the host.

409. Send a configured capacity to the storage array after receiving a connection success message.

The configured capacity may be used to instruct the storage array to provide the host with storage space that has the configured capacity.

After receiving the configured capacity sent by the host, the storage array may provide the host with the storage space that has the configured capacity.

For example, the storage array may obtain and parse a stored configuration policy file, and create a disk domain in the storage array by using the configuration policy file.

The configuration policy file may be preset in the resource configuration program. The configuration policy file may be used to automatically create a disk domain and a storage pool. Generally, complex steps need to be performed to create a disk domain and a storage pool. Therefore, the configuration policy file may be embedded into the resource configuration program during development of the resource configuration program, so as to directly read the configuration policy file to create a disk domain and a storage array when the resource configuration program is in use.

410. Create a storage pool according to a disk domain after receiving a third configuration success message.

411. Create storage space that has the configured capacity in the storage pool.

412. Create a logical host.

413. Create a host group.

414. Create a logical unit number.

415. Create a logical unit number group.

416. Create a mapping view.

In actual application, the created logical host needs to be added to the host group, the created logical unit number needs to be added to the logical unit number group, and the host group and the logical unit number group need to be added to the mapping view.

Step 412 to step 416 may be performed to configure storage space, which is determined from the storage array and meets a condition, for the host, and these steps are common steps in the storage array configuration process. In specific implementation, step 412 to step 416 may be implemented by automatic execution of the resource allocation program according to code that is set. Compilation of the code can be implemented by a person of ordinary skill in the art, which is not described herein.

417. Invoke a scan command to scan storage space configured in a host.

The resource allocation program in the host may invoke the scan command to scan the storage space configured in the host.

418. Invoke a partition command to partition the storage space configured in the host.

After scanning the storage space, the resource allocation program in the host may further invoke the partition command to partition the storage space configured in the host.

419. Invoke a formatting command to format the storage space.

After partitioning is completed, the resource allocation program in the host may further invoke the formatting command to format the storage space.

It may be added that the storage array separately feeds back a success message to the host after step 406 and after step 408 to step 416, namely, returning successfully, so that the host proceeds to a subsequent step.

In one possible implementation manner, configuration management may be performed by using a management plane in the process of configuring the storage array. The management plane may include a storage management plane and a host management plane. Refer to FIG. 4B, which is a schematic diagram of storage array configuration by an administrator according to some embodiments of the present invention. The administrator only directly enters information to a resource allocation program b2. The resource allocation program b2 may automatically configure a related management IP address and a related service IP address at an interface layer (OM) b4 of a storage array. At the same time, the resource allocation program b2 may complete configuration and initialization of the storage array by using a host management program b6 and a command-line tool b8.

In another possible implementation manner, the resource allocation program may include multiple submodules. For details, refer to FIG. 4C, which is a schematic diagram of structural connections among a resource allocation program, a client layer of a host, and a storage array according to some embodiments of the present invention. The resource allocation program c2 may include a management port configuration submodule c21, a service port configuration submodule c22, a resource allocation policy submodule c23, a disk data processing submodule c24, and a host disk management submodule c25. An administrator may enter configuration information to a unified interface layer c26 of the resource allocation program c2 by using the client layer c4. A communication layer c27 of the resource allocation program c2 may establish a connection to an interface layer (OM) c61 of the storage array c6. A command line c28 of the resource allocation program c2 directly controls a disk c62 of the storage array c6. The management port configuration submodule c21 may be configured to perform step 402 to step 405. The service port configuration submodule c22 may be configured to perform step 406 to step 408. The resource allocation policy submodule c23 may be configured to perform step 411 to step 419. The disk data processing submodule c24 may be configured to perform step 412 to step 416. The host disk management submodule c25 may be configured to perform step 417 to step 419.

To sum up, in the storage array automatic configuration method according to this embodiment of the present invention, a storage array is automatically configured according to received configuration information, which resolves the following problems in the prior art: a complex configuration process and many interactions that are involved when an administrator needs to manually switch among storage management programs to configure a storage array, difficulties in maintaining and upgrading the storage management programs, and strict requirements and technical thresholds for the administrator. The storage array can be automatically configured after configuration information entered by the administrator is received, which greatly simplifies a storage array configuration process, improves production efficiency, and significantly reduces service training costs of the administrator.

Referring to FIG. 5, FIG. 5 is a schematic diagram of a structure of a storage array automatic configuration apparatus according to an embodiment of the present invention. The storage array automatic configuration apparatus is illustrated mainly by application of the apparatus in the host 120 in the implementation environment shown in FIG. 1. The storage array automatic configuration apparatus may include a receiving module 502, a first sending module 504, a second sending module 506, a third sending module 508, and a fourth sending module 510.

The receiving module 502 is configured to receive configuration information, where the configuration information includes a management Internet Protocol IP address, a service IP address, and a configured capacity.

The first sending module 504 is configured to send a first configuration message to a storage array, where the first configuration message includes the management IP address.

The second sending module 506 is configured to send a second configuration message to the storage array, where the second configuration message includes the service IP address, and a destination IP address of the second configuration message is the management IP address.

The third sending module 508 is configured to send a connection message to the storage array, where a destination IP address of the connection message is the service IP address, and the connection message is used to establish an Internet Small Computer System Interface iSCSI connection to the storage array.

The fourth sending module 510 is configured to send the configured capacity to the storage array, where the configured capacity is used to instruct the storage array to provide the host with storage space that has the configured capacity.

To sum up, in the storage array automatic configuration apparatus according to this embodiment of the present invention, a storage array is automatically configured according to received configuration information, which resolves the following problems in the prior art: a complex configuration process and many interactions that are involved when an administrator needs to manually switch among storage management programs to configure a storage array, difficulties in maintaining and upgrading the storage management programs, and strict requirements and technical thresholds for the administrator. The storage array can be automatically configured after configuration information entered by the administrator is received, which greatly simplifies a storage array configuration process, improves production efficiency, and significantly reduces service training costs of the administrator.

Referring to FIG. 6, FIG. 6 is a schematic diagram of a structure of a storage array automatic configuration apparatus according to another embodiment of the present invention. The storage array automatic configuration apparatus is illustrated mainly by application of the apparatus in the host 120 in the implementation environment shown in FIG. 1. The storage array automatic configuration apparatus may include a receiving module 602, a first sending module 604, a second sending module 606, a third sending module 608, and a fourth sending module 610.

The receiving module 602 is configured to receive configuration information, where the configuration information includes a management Internet Protocol IP address, a service IP address, and a configured capacity.

The first sending module 604 is configured to send a first configuration message to a storage array, where the first configuration message includes the management IP address.

The second sending module 606 is configured to send a second configuration message to the storage array, where the second configuration message includes the service IP address, and a destination IP address of the second configuration message is the management IP address.

The third sending module 608 is configured to send a connection message to the storage array, where a destination IP address of the connection message is the service IP address, and the connection message is used to establish an Internet Small Computer System Interface iSCSI connection to the storage array.

The fourth sending module 610 is configured to send the configured capacity to the storage array, where the configured capacity is used to instruct the storage array to provide the host with storage space that has the configured capacity.

Optionally, the first sending 604 may include a broadcast unit 604a, a first receiving unit 604b, and a first sending unit 604c.

The broadcast unit 604a may be configured to broadcast a discovery message, where the discovery message is used to trigger the storage array to send a response to the host in response to the discovery message.

The first receiving unit 604b may be configured to receive the response sent by the storage array, where the response carries an identifier of the storage array.

The first sending unit 604c may be configured to unicast, according to the identifier, a management IP address configuration request to the storage array, where the management IP configuration request carries the management IP address.

Optionally, the first sending module 604 may further include a second sending unit 604d and a second receiving unit 604e.

The second sending unit 604d may be configured to unicast, according to the identifier, a first authentication request to the storage array, where the first authentication request carries identity authentication information.

The second receiving unit 604e may be configured to receive a response message, of the first authentication request, that is sent by the storage array, where the response message of the first authentication request is used to indicate that the identity authentication information is authenticated successfully.

To sum up, in the storage array automatic configuration apparatus according to this embodiment of the present invention, a storage array is automatically configured according to received configuration information, which resolves the following problems in the prior art: a complex configuration process and many interactions that are involved when an administrator needs to manually switch among storage management programs to configure a storage array, difficulties in maintaining and upgrading the storage management programs, and strict requirements and technical thresholds for the administrator. The storage array can be automatically configured after configuration information entered by the administrator is received, which greatly simplifies a storage array configuration process, improves production efficiency, and significantly reduces service training costs of the administrator.

It should be noted that the foregoing functional module division is used only as an example for describing storage array configuration performed by the storage array automatic configuration apparatus according to the foregoing embodiment. In actual application, the foregoing functions can be allocated to different modules and implemented according to a requirement, that is, an inner structure of a host is divided into different functional modules to implement all or some of the functions described above. In addition, the storage array automatic configuration apparatus according to the foregoing embodiment and the storage array automatic configuration method are based on a same idea. For a specific implementation process, refer to the method embodiments, and details are not described herein again.

Referring to FIG. 7, FIG. 7 is a schematic diagram of a structure of a host according to an embodiment of the present invention. The host is illustrated mainly by application to the host 120 in the implementation environment shown in FIG. 1. The host may include a receiver 702 and a transmitter 704.

The receiver 702 may be configured to receive configuration information, where the configuration information includes a management Internet Protocol IP address, a service IP address, and a configured capacity.

The transmitter 704 may send a first configuration message to a storage array, where the first configuration message includes the management IP address.

The transmitter 704 may further send a second configuration message to the storage array, where the second configuration message includes the service IP address, and a destination IP address of the second configuration message is the management IP address.

The transmitter 704 may be further configured to send a connection message to the storage array, where a destination IP address of the connection message is the service IP address, and the connection message is used to establish an Internet Small Computer System Interface iSCSI connection to the storage array.

The transmitter 704 may be further configured to send the configured capacity to the storage array, where the configured capacity is used to instruct the storage array to provide the host with storage space that has the configured capacity.

To sum up, in the host according to this embodiment of the present invention, a storage array is automatically configured according to received configuration information, which resolves the following problems in the prior art: a complex configuration process and many interactions that are involved when an administrator needs to manually switch among storage management programs to configure a storage array, difficulties in maintaining and upgrading the storage management programs, and strict requirements and technical thresholds for the administrator. The storage array can be automatically configured after configuration information entered by the administrator is received, which greatly simplifies a storage array configuration process, improves production efficiency, and significantly reduces service training costs of the administrator.

Still referring to FIG. 7, the host may include a receiver 702 and a transmitter 704.

The receiver 702 may be configured to receive configuration information, where the configuration information includes a management Internet Protocol IP address, a service IP address, and a configured capacity.

The transmitter 704 may be configured to send a first configuration message to a storage array, where the first configuration message includes the management IP address received by the receiver 702.

The transmitter 704 may be further configured to send a second configuration message to the storage array, where the second configuration message includes the service IP address, and a destination IP address of the second configuration message is the management IP address received by the receiver 702.

The transmitter 704 may be further configured to send a connection message to the storage array, where a destination IP address of the connection message is the service IP address, and the connection message is used to establish an Internet Small Computer System Interface iSCSI connection to the storage array.

The transmitter 704 may be further configured to send the configured capacity to the storage array, where the configured capacity is used to instruct the storage array to provide the host with storage space that has the configured capacity.

Optionally, the transmitter 704 is configured to broadcast a discovery message, where the discovery message is used to trigger the storage array to send a response to the host.

The receiver 702 is further configured to receive the response sent by the storage array, where the response carries an identifier of the storage array.

The transmitter 704 may be further configured to unicast, according to the identifier, a management IP configuration request to the storage array, where the management IP configuration request carries the management IP address.

Optionally, the transmitter 704 may be further configured to unicast, according to the identifier, a first authentication request to the storage array, where the first authentication request carries identity authentication information.

The receiver 702 may be further configured to receive a response message, of the first authentication request, that is sent by the storage array, where the response message of the first authentication request is used to indicate that the identity authentication information is authenticated successfully.

To sum up, in the host according to this embodiment of the present invention, a storage array is automatically configured according to received configuration information, which resolves the following problems in the prior art: a complex configuration process and many interactions that are involved when an administrator needs to manually switch among storage management programs to configure a storage array, difficulties in maintaining and upgrading the storage management programs, and strict requirements and technical thresholds for the administrator. The storage array can be automatically configured after configuration information entered by the administrator is received, which greatly simplifies a storage array configuration process, improves production efficiency, and significantly reduces service training costs of the administrator.

Referring to FIG. 8, FIG. 8 is a schematic diagram of a structure of a storage system according to an embodiment of the present invention. The storage system includes a host 802 and a storage array 804.

In one possible implementation manner, the host 802 includes the storage array automatic configuration apparatus depicted in FIG. 5 or FIG. 6.

The storage array 804 configures a management IP address, which is sent by the host 802, on a management port when receiving a first configuration message sent by the host.

The storage array 804 configures a service IP address, which is sent by the host 802, on a service port when receiving a second configuration message.

The storage array 804 establishes, according to the service IP address, an ISCSI connection to the host 802 when receiving a connection message sent by the host, and after the ISCSI connection is established successfully, receives a configured capacity sent by the host 802 and provides the host 802 with storage space that has the configured capacity.

In another possible implementation manner, the host 802 may be the host depicted in FIG. 7.

The storage array 804 configures a management IP address, which is sent by the host 802, on a management port when receiving a first configuration message sent by the host.

The storage array 804 configures a service IP address, which is sent by the host 802, on a service port when receiving a second configuration message.

The storage array 804 establishes, according to the service IP address, an iSCSI connection to the host 802 when receiving a connection message sent by the host, and after the iSCSI connection is established successfully, receives a configured capacity sent by the host 802 and provides the host 802 with storage space that has the configured capacity.

To sum up, in the storage system according to this embodiment of the present invention, a storage array is automatically configured in the host according to received configuration information, which resolves the following problems in the prior art: a complex configuration process and many interactions that are involved when an administrator needs to manually switch among storage management programs to configure a storage array, difficulties in maintaining and upgrading the storage management programs, and strict requirements and technical thresholds for the administrator. The storage array can be automatically configured after configuration information entered by the administrator is received, which greatly simplifies a storage array configuration process, improves production efficiency, and significantly reduces service training costs of the administrator.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division may merely be logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A storage array automatic configuration method, applied to a storage system, wherein the storage system comprises a host and a storage array, and the method comprises:
• receiving (201, 301), by the host, configuration information entered by a user into the host, wherein the configuration information comprises a management Internet Protocol, IP, address, a service IP address, and a configured capacity;
• sending (202, 302), by the host, a first configuration message to the storage array, wherein the first configuration message comprises the management IP address,
wherein the sending, by the host, the first configuration message to the storage array comprises:
∘ broadcasting (402), by the host, a discovery message, wherein the discovery message is used to trigger the storage array to send a response to the host in response to the discovery message;
∘ receiving (403), by the host, the response sent by the storage array, wherein the response carries an identifier of the storage array; and
∘ unicasting (404), by the host according to the identifier, a management IP configuration request to the storage array, wherein the management IP configuration request carries the management IP address;
• automatically sending (203, 303), by the host, a second configuration message to the storage array in response to receiving a first configuration success message, wherein the second configuration message comprises the service IP address, and a destination IP address of the second configuration message is the management IP address;
• automatically sending (204, 304), by the host, a connection message to the storage array in response to receiving a second configuration success message, wherein a destination IP address of the connection message is the service IP address, and the connection message is used to establish an Internet Small Computer System Interface, iSCSI connection to the storage array; and
• automatically sending (205, 305), by the host, the configured capacity to the storage array in response to receiving a connection success message, wherein the configured capacity is used to instruct the storage array to provide the host with storage space that has the configured capacity.

2. The method according to claim 1, before the unicasting, by the host according to the identifier, the management IP configuration request to the storage array, further comprising:
unicasting, by the host according to the identifier, a first authentication request to the storage array, wherein the first authentication request carries identity authentication information; and
receiving, by the host, a response message, of the first authentication request, that is sent by the storage array, wherein the response message of the first authentication request is used to indicate that the identity authentication information is authenticated successfully.

3. A storage system comprising a host and a storage array, wherein the storage system is configured to perform any of the methods according to claims 1-2.

## Patentansprüche

1. Automatisches Konfigurationsverfahren für ein Speicherarray, das an einem Speichersystem angewendet wird, wobei das Speichersystem einen Host und ein Speicherarray umfasst, und wobei das Verfahren Folgendes umfasst:
• Empfangen (201, 301), durch den Host, von Konfigurationsinformationen, die durch einen Benutzer in den Host eingegeben werden, wobei die Konfigurationsinformationen eine Management-Internetprotokoll-Adresse bzw. Management-IP-Adresse, eine Dienst-IP-Adresse und eine konfigurierte Kapazität umfassen;
• Senden (202, 302), durch den Host, einer ersten Konfigurationsnachricht zu dem Speicherarray, wobei die erste Konfigurationsnachricht die Management-IP-Adresse umfasst,
wobei das Senden, durch den Host, der ersten Konfigurationsnachricht zu dem Speicherarray Folgendes umfasst:
∘ Rundsenden (402), durch den Host, einer Entdeckungsnachricht, wobei die Entdeckungsnachricht zum Auslösen, dass das Speicherarray eine Antwort als Reaktion auf die Entdeckungsnachricht zu dem Host sendet, verwendet wird;
∘ Empfangen (403), durch den Host, der durch das Speicherarray gesendeten Antwort, wobei die Antwort eine Kennung des Speicherarrays führt; und
∘ "Unicasting" (404), durch den Host gemäß der Kennung, einer Management-IP-Konfigurationsanforderung zu dem Speicherarray, wobei die Management-IP-Konfigurationsanforderung die Management-IP-Adresse führt;
• automatisches Senden (203, 303), durch den Host, einer zweiten Konfigurationsnachricht zu dem Speicherarray als Reaktion auf den Empfang einer ersten Konfigurationserfolgsnachricht, wobei die zweite Konfigurationsnachricht die Dienst-IP-Adresse umfasst und eine Ziel-IP-Adresse der zweiten Konfigurationsnachricht die Management-IP-Adresse ist;
• automatisches Senden (204, 304), durch den Host, einer Verbindungsnachricht zu dem Speicherarray als Reaktion auf den Empfang einer zweiten Konfigurationserfolgsnachricht, wobei eine Ziel-IP-Adresse der Verbindungsnachricht die Dienst-IP-Adresse ist und die Verbindungsnachricht zum Erstellen einer "Internet-Small-ComputerSystem-Interface"-Verbindung bzw. iSCSI-Verbindung mit dem Speicherarray verwendet wird; und
• automatisches Senden (205, 305), durch den Host, der konfigurierten Kapazität zu dem Speicherarray als Reaktion auf den Empfang einer Verbindungserfolgsnachricht, wobei die konfigurierte Kapazität dazu verwendet wird, das Speicherarray anzuweisen, dem Host Speicherraum, der die konfigurierte Kapazität aufweist, zur Verfügung zu stellen.

2. Verfahren nach Anspruch 1, das vor dem "Unicasting", durch den Host gemäß der Kennung, der Management-IP-Konfigurationsanforderung zu dem Speicherarray ferner Folgendes umfasst:
"Unicasting", durch den Host gemäß der Kennung, einer ersten Authentifizierungsanforderung zu dem Speicherarray, wobei die erste Authentifizierungsanforderung Identitätsauthentifizierungsinformationen führt; und Empfangen, durch den Host, einer Antwortnachricht auf die erste Authentifizierungsanforderung, die durch das Speicherarray gesendet wird, wobei die Antwortnachricht auf die erste Authentifizierungsanforderung zum Angeben, dass die Identitätsauthentifizierungsinformationen erfolgreich authentifiziert werden, verwendet wird.

3. Speichersystem, das einen Host und ein Speicherarray umfasst, wobei das Speichersystem ausgelegt ist zum Durchführen eines beliebigen der Verfahren nach den Ansprüchen 1-2.

## Revendications

1. Procédé de configuration automatique de matrice de stockage, appliqué à un système de stockage, le système de stockage comportant un hôte et une matrice de stockage, et le procédé comportant :
• la réception (201, 301), par l'hôte, d'informations de configuration introduites par un utilisateur dans l'hôte, les informations de configuration comportant une adresse de protocole Internet, IP, de gestion, une adresse IP de service, et une capacité configurée ;
• l'envoi (202, 302), par l'hôte, d'un premier message de configuration à la matrice de stockage, le premier message de configuration comportant l'adresse IP de gestion, l'envoi, par l'hôte, du premier message de configuration à la matrice de stockage comportant :
∘ la diffusion générale (402), par l'hôte, d'un message de découverte, le message de découverte étant utilisé pour déclencher l'envoi par la matrice de stockage d'une réponse à l'hôte en réponse au message de découverte ;
∘ la réception (403), par l'hôte, de la réponse envoyée par la matrice de stockage, la réponse transportant un identifiant de la matrice de stockage ; et
∘ la monodiffusion (404), par l'hôte selon l'identifiant, d'une demande de configuration IP de gestion à la matrice de stockage, la demande de configuration IP de gestion transportant l'adresse IP de gestion ;
• l'envoi automatique (203, 303), par l'hôte, d'un second message de configuration à la matrice de stockage en réponse à la réception d'un premier message de réussite de configuration, le second message de configuration comportant l'adresse IP de service, et une adresse IP de destination du second message de configuration étant l'adresse IP de gestion ;
• l'envoi automatique (204, 304), par l'hôte, d'un message de connexion à la matrice de stockage en réponse à la réception d'un second message de réussite de configuration, une adresse IP de destination du message de connexion étant l'adresse IP de service, et le message de connexion étant utilisé pour établir une connexion par interface Internet de petits systèmes informatiques, iSCSI, à la matrice de stockage ; et
• l'envoi automatique (205, 305), par l'hôte, de la capacité configurée à la matrice de stockage en réponse à la réception d'un message de réussite de connexion, la capacité configurée étant utilisée pour donner comme instruction à la matrice de stockage de fournir à l'hôte un espace de stockage qui présente la capacité configurée.

2. Procédé selon la revendication 1, comportant en outre, avant la monodiffusion, par l'hôte selon l'identifiant, de la demande de configuration IP de gestion à la matrice de stockage :
la monodiffusion, par l'hôte selon l'identifiant, d'une première demande d'authentification à la matrice de stockage, la première demande d'authentification transportant des informations d'authentification d'identité ; et
la réception, par l'hôte, d'un message de réponse, de la première demande d'authentification, qui est émis par la matrice de stockage, le message de réponse de la première demande d'authentification étant utilisé pour indiquer que les informations d'authentification d'identité sont authentifiées avec succès.

3. Système de stockage comportant un hôte et une matrice de stockage, le système de stockage étant configuré pour réaliser l'un quelconque des procédés selon les revendications 1 à 2.
